# DEMANDE DE BREVET EUROPEEN

(11) **EP 0 821 148 A1**
(43) Date de publication de la demande: **28.01.1998**
(21) Numéro de dépôt: 97401651.1
(22) Date de dépôt: 09.07.1997
(51) Int. Cl.: F02D 9/10, F16K 1/22

(54) **Agencement d'une vanne dans un organe tubulaire et procédé de montage d'un volet métallique de cet agencement**

(30) Priorité: 26.07.1996 FR 9609469
(71) Demandeur: ECIA - EQUIPEMENTS ET COMPOSANTS POUR L'INDUSTRIE AUTOMOBILE, F-25400 Audincourt (FR)
(72) Inventeur: Escaravage, Gérard, 25700 Valentigney (FR)
(74) Mandataire: Moncheny, Michel

(57) **Abrégé**

La vanne (10) comprend un volet (14) monté rotatif à l'intérieur de l'organe tubulaire (12) autour d'un axe de rotation (X) sensiblement diamétral. Le volet (14) est porté par des premier et second tourillons (16,18) montés rotatifs autour de l'axe de rotation (X) dans des supports (20,22) solidaires de l'organe tubulaire (12) formant des premier et second logements (26,28) sensiblement diamétralement opposés débouchant à l'intérieur de l'organe tubulaire (12). Le volet (14) forme une entretoise d'écartement des tourillons (16,18) entre eux vers des fonds (30,32), sensiblement transversaux à l'axe de rotation (X), délimitant les logements (26,28). Le volet (14) comprend au moins un pli (78 à 82) de précontrainte du volet en position d'écartement des tourillons (16,18). L'organe tubulaire (12) est constitué par exemple par un tronçon de tubulure d'échappement de véhicule automobile.

## Description

La présente invention concerne un agencement d'une vanne dans un organe tubulaire et un procédé de montage d'un volet métallique de cet agencement.

Elle s'applique en particulier à l'agencement d'une vanne dans une tubulure de ligne d'échappement de véhicule automobile.

Certaines lignes d'échappement de véhicule automobile sont munies d'une tubulure principale reliée à des premiers organes d'échappement et d'une tubulure secondaire, en dérivation, reliée à des seconds organes d'échappement ayant, par exemple, des caractéristiques acoustiques et/ou catalytiques différentes de celles des premiers organes d'échappement.

Les gaz d'échappement sont canalisés dans l'une ou l'autre des tubulures principale ou secondaire au moyen de vannes agencées dans ces tubulures.

On connaît déjà dans l'état de la technique un agencement d'une vanne dans un organe tubulaire, du type dans lequel la vanne comprend un volet métallique monté rotatif à l'intérieur de l'organe tubulaire autour d'un axe de rotation sensiblement diamétral.

Habituellement, l'axe de rotation du volet est matérialisé par un arbre ou une paire de tourillons montés rotatifs dans des perçages de la paroi de l'organe tubulaire formant paliers.

Un tel agencement pose des problèmes d'étanchéité au niveau des paliers ainsi que des problèmes de maîtrise des jeux axiaux de l'arbre ou des tourillons dans les paliers. Ces jeux axiaux provoquent des bruits indésirables et conduisent à une usure prématurée des paliers.

DE 42 29 299 C décrit un agencement d'une vanne dans un organe tubulaire du type précité, dans lequel le volet est porté par des premier et second tourillons montés rotatifs autour de l'axe de rotation dans des supports solidaires de l'organe tubulaire formant des premier et second logements sensiblement diamétralement opposés débouchant à l'intérieur de l'organe tubulaire.

L'invention a pour but de bien maîtriser l'étanchéité et les jeux d'une vanne agencée dans un organe tubulaire.

A cet effet, l'invention a pour objet un agencement d'une vanne dans un organe tubulaire, du type décrit dans DE 42 29 299 C, caractérisé en ce que le volet comprend au moins un pli, sensiblement perpendiculaire à son axe de rotation, de précontrainte du volet en position d'écartement des tourillons, le volet formant ainsi une entretoise d'écartement des tourillons entre eux vers des fonds sensiblement transversaux à l'axe de rotation, délimitant les logements.

Suivant d'autres caractéristiques de cet agencement :
- le premier tourillon est muni d'une extrémité de manoeuvre faisant saillie à l'extérieur de l'organe tubulaire à travers un orifice de passage ménagé dans le fond du premier logement, l'extrémité de manoeuvre étant reliée au reste du premier tourillon par un épaulement d'appui coopérant avec un bossage d'appui qui est ménagé dans le fond du premier logement, autour de l'orifice de passage, et qui fait saillie vers l'intérieur de l'organe tubulaire ;
- l'extrémité de manoeuvre du premier tourillon est reliée à une manivelle de manoeuvre comprenant une extrémité de liaison munie d'un orifice d'emboîtement sur l'extrémité de manoeuvre, cette dernière étant munie de deux méplats diamétralement opposés d'immobilisation en rotation de la manivelle par rapport au premier tourillon coopérant avec un contour complémentaire de l'orifice d'emboîtement, la manivelle étant immobilisée axialement sur le premier tourillon par enserrement de son extrémité de liaison entre, d'une part, deux épaulements de l'extrémité de manoeuvre délimitant les deux méplats, et d'autre part, deux saillies radiales de l'extrémité de manoeuvre formées par écrasement de cette extrémité ;
- le fond du second logement est bombé vers l'intérieur de l'organe tubulaire ;
- dans chaque logement, un organe annulaire formant palier est interposé coaxialement au tourillon correspondant entre deux surfaces de portée délimitant respectivement ce tourillon et ce logement, le palier étant immobilisé axialement entre le fond du logement et un épaulement d'appui délimitant une tête de liaison du tourillon avec le volet ;
- le palier coopère avec un enfoncement annulaire d'expansion axiale du palier, ménagé dans le fond du logement correspondant, en retrait par rapport à la surface de ce fond en contact avec le tourillon correspondant ;
- le palier est fabriqué dans un matériau à base de fibres métalliques et de graphite ;
- le volet comprend un pli principal central faisant saillie sur une face du volet et deux plis secondaires, s'étendant de part et d'autre du pli principal, faisant saillie sur l'autre face du volet, le pli principal ayant une profondeur plus importante que celle des plis secondaires ;
- les supports formant logements sont venus de matière avec l'organe tubulaire ;
- le volet est accroché dans les tourillons par emboîtement de la tranche d'extrémités d'accrochage diamétralement opposées de ce volet dans des fentes ménagées dans les tourillons;
- chaque extrémité d'accrochage est munie d'une encoche de centrage du volet par rapport aux tourillons correspondants, ménagée dans la tranche de cette extrémité, coopérant par effet de coin avec une saillie complémentaire ménagée dans la fente du tourillon correspondant;
- l'organe tubulaire constitue un tronçon de tubulure d'échappement de véhicule automobile.

L'invention a également pour objet un procédé de montage du volet métallique de l'agencement défini ci-dessus, caractérisé en ce que préalablement à la mise en place du volet dans l'organe tubulaire, on plisse ce volet de manière à former des plis sensiblement perpendiculaires à l'axe d'alignement des extrémités d'accrochage du volet, afin que l'écartement entre ces extrémités soit inférieur à l'écartement entre les tourillons en place dans l'organe tubulaire,
- on introduit le volet dans l'organe tubulaire de manière que ses extrémités soient sensiblement alignées avec les fentes des tourillons, et
- on comprime les faces du volet de manière à aplatir, au moins partiellement, les plis afin d'écarter les extrémités d'accrochage du volet l'une de l'autre et emboîter ces extrémités dans les fentes correspondantes des tourillons.

L'invention sera mieux comprise à la lecture de la description qui va suivre donnée uniquement à titre d'exemple et faite en se référant aux dessins annexés dans lesquels :
- la figure 1 est une vue en coupe axiale d'une vanne agencée selon l'invention dans un organe tubulaire;
- la figure 2 est une vue en coupe suivant la ligne 2-2 de la figure 1, à échelle réduite, l'extrémité de manoeuvre du premier tourillon étant toutefois coupée suivant un plan, parallèle à celui de la figure 1 ;
- la figure 3 est une vue similaire à la figure 1, à échelle réduite, illustrant une étape de montage du volet de la vanne.

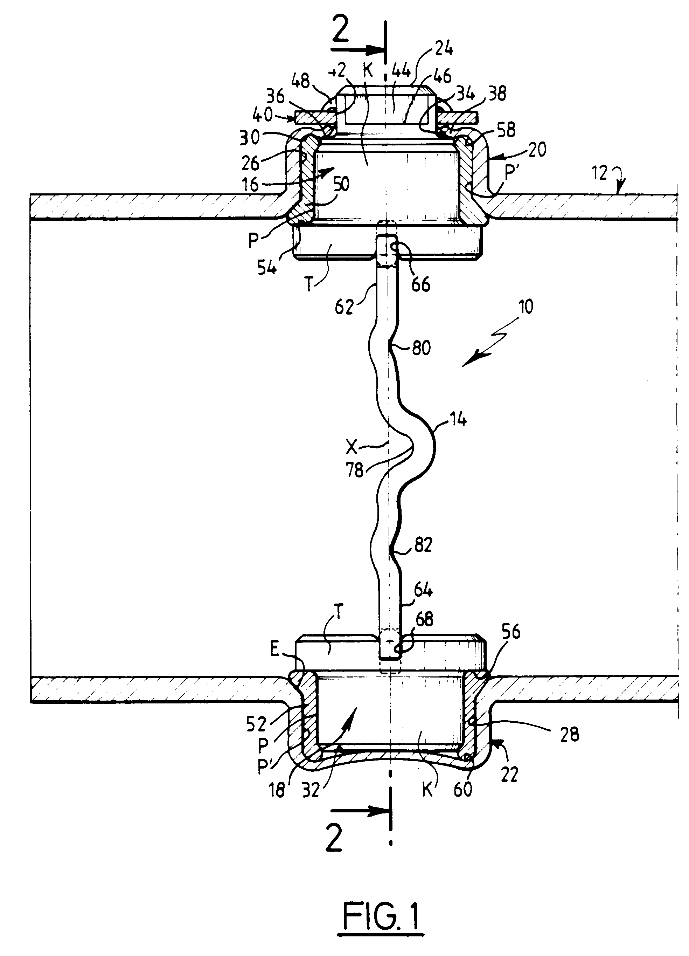

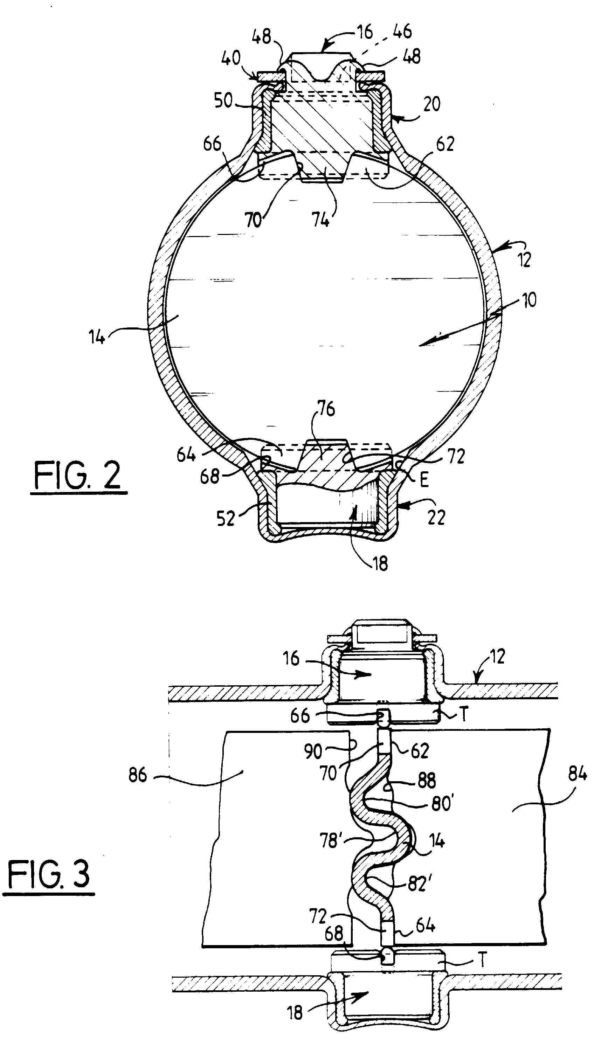

On a représenté sur les figures 1 et 2 une vanne 10 agencée selon l'invention dans un organe tubulaire 12 constitué, par exemple, par un tronçon de tubulure d'échappement de véhicule automobile.

L'organe tubulaire 12 a une forme générale cylindrique de section circulaire.

La vanne 10 comprend un volet métallique 14 monté rotatif à l'intérieur de l'organe tubulaire 12 autour d'un axe de rotation X sensiblement diamétral.

Le volet 14 a une forme générale de disque de diamètre adapté pour être contenu dans l'organe tubulaire 12.

Le volet 14 est porté par une paire de tourillons 16,18 montés rotatifs autour de l'axe X dans des supports 20,22 solidaires de l'organe tubulaire 12.

Chaque tourillon 16,18, de forme générale cylindrique étagée, comporte une tête T et un corps K, ce dernier étant délimité par une surface de portée P cylindrique.

Un premier tourillon 16 est prolongé par une extrémité 24 de manoeuvre du volet 14.

Chaque support 20,22, de préférence venu de matière avec l'organe tubulaire 12, a une forme générale cylindrique d'axe coïncidant sensiblement avec l'axe de rotation X.

Les supports 20,22 forment des logements 26,28, de forme générale cylindrique, délimités par un fond 30,32 sensiblement transversal à l'axe X, et une surface cylindrique de portée P', d'axe coïncidant sensiblement avec l'axe X.

Les logements 26,28, sensiblement diamétralement opposés, débouchent à l'intérieur de l'organe tubulaire 12.

On notera que l'extrémité E des surfaces de portée P', opposée au fond du logement, a une forme tronconique s'évasant vers l'intérieur de l'organe tubulaire 12.

Le volet 14 forme une entretoise d'écartement des tourillons 16,18 entre eux vers les fonds 30,32 des logements 26,28 correspondants.

L'extrémité de manoeuvre 24 du premier tourillon 16 fait saillie à l'extérieur de l'organe tubulaire 12 à travers un orifice circulaire de passage 34 ménagé dans le fond 30 du premier logement correspondant 26.

On notera que l'extrémité de manoeuvre 24 est reliée au corps K du premier tourillon 16 par un épaulement d'appui 36 coopérant avec un bossage annulaire d'appui 38 qui est ménagé dans le fond 30 du premier logement 26 autour de l'orifice de passage 34, et qui fait saillie vers l'intérieur de l'organe tubulaire 12.

La vanne 10 est commandée au moyen d'une manivelle de manoeuvre 40 reliée à l'extrémité de manoeuvre 24 du premier tourillon 16.

Sur les figures 1 et 2, on a représenté une extrémité de liaison de cette manivelle de manoeuvre munie d'un orifice 42 d'emboîtement sur l'extrémité de manoeuvre 24. La manivelle 40 est immobilisée en rotation par rapport au premier tourillon 16 au moyen de deux méplats 44 diamétralement opposés coopérant avec un contour complémentaire de l'orifice d'emboîtement 42. La manivelle 40 est immobilisée axialement sur le premier tourillon 16 par enserrement de son extrémité de liaison entre, d'une part, deux épaulements 46 de l'extrémité de manoeuvre délimitant les deux méplats 44, et d'autre part, deux saillies radiales 48 de l'extrémité de manoeuvre formées par écrasement de cette extrémité (voir notamment figure 2).

Le fond 32 du second logement 18 est bombé vers l'intérieur de l'organe tubulaire 12 afin, notamment, de minimiser les surfaces de contact de ce fond et du tourillon correspondant.

Le bossage 38 du premier fond 30 et le second fond 32 bombé minimisent les frottements entre ces fonds et les tourillons 16, 18.

Dans chaque logement 26,28, un organe annulaire formant palier 50,52 est interposé coaxialement au tourillon correspondant 16,18 entre les deux surfaces de portée P,P'.

Le palier 50,52 est immobilisé axialement entre le fond 30,32 du logement et un épaulement d'appui 54,56 délimitant la tête T et reliant cette tête au corps K du tourillon.

De préférence, l'extrémité du palier 50,52 en contact avec le fond 30,32 est reçue dans un enfoncement annulaire 58,60 d'expansion axiale du palier, ménagé dans ce fond. L'enfoncement 58,60 est en retrait par rapport à la surface du fond 30,32 en contact avec le tourillon 16,18 correspondant.

Dans le cas du premier logement 26, l'enfoncement 58 relie le bossage 38 à la surface de portée P' de ce logement. Dans le cas du second logement 28, l'enfoncement 60 est délimité par la jonction du fond bombé 32 avec la surface de portée P' de ce logement.

Les paliers 50,52 sont fabriqués dans un matériau susceptible d'être déformé pour épouser avec précision les contours complémentaires des tourillons 16,18 et des logements 26,28 avec lesquels ils sont en contact. Le matériau est par exemple du type à base de fibres métalliques et de graphite, étanche au gaz d'échappement.

Le volet 14 est accroché dans les têtes T des tourillons par emboîtement de la tranche d'extrémités d'accrochage 62,64 diamétralement opposés de ce volet 14 dans des fentes 66,68 ménagées dans ces têtes T.

En se référant à la figure 2, on voit que chaque extrémité d'accrochage 62, 64 est munie d'une encoche 70,72 de centrage du volet 14 par rapport aux tourillons 16,18 correspondant, ménagée dans la tranche de cette extrémité 62,64.

Chaque encoche 70,72 coopère par effet de coin avec une saillie complémentaire 74,76 ménagée dans la fente 66,68 du tourillon correspondant 16,18.

On notera que le contour des encoches 70,72 est divergeant vers la périphérie du volet de manière à coopérer avec le contour complémentaire convergeant de l'encoche correspondante.

En se référant à nouveau à la figure 1, on voit que le volet 14 comporte un pli principal 78 faisant saillie sur une face de ce volet et deux plis secondaires 80,82 s'étendant de part et d'autre du pli principal 78 et faisant saillie sur l'autre face du volet 14.

On notera que le pli principal 78 a une profondeur plus importante que celle des plis secondaires 80,82.

Les plis 78 à 82 sont sensiblement perpendiculaires à l'axe de rotation X du volet de manière à précontraindre ce volet en position d'écartement des tourillons 16,18.

Le volet 14 précontraint sollicite les têtes T des tourillons 16, 18 en appui contre les paliers 50, 52 correspondants. La précontrainte du volet 14 provoque une expansion axiale des paliers 50,52 dans les enfoncements 58,60 empêchant les jeux axiaux des tourillons 16,18 dans ces paliers.

Les effets de la précontrainte du volet 14 sur les paliers 50, 52 sont limités par le contact des tourillons 16, 18 sur les fonds 30, 32 des logements correspondants.

Les plis du volet 14 absorbent partiellement sa dilatation. Les fonds 30, 32 des logements supportent le reliquat de cette dilatation.

On décrira ci-dessous le procédé de montage du volet 14 dans l'organe tubulaire 12, en se référant notamment à la figure 3.

Initialement, les tourillons 16,18 et les paliers 50,52 sont montés dans les logements 26,28 à l'aide de moyens connus en soi.

Préalablement à la mise en place du volet 14 dans l'organe tubulaire 12, on plisse ce volet 14 à l'aide de moyens classiques, de manière à former des plis 78' à 82' sensiblement perpendiculaires à l'axe d'alignement des extrémités d'accrochage 62,64 du volet. Ces plis 80' à 82' permettent d'obtenir un écartement entre les extrémités d'accrochage 62, 64 inférieur à l'écartement entre les tourillons 16,18 qui sont en place dans l'organe tubulaire 12.

L'accrochage du volet 14 ainsi plissé dans les tourillons 16,18 se fait à l'aide d'une presse classique comportant une enclume 84 et un marteau 86 de dimensions adaptées pour pénétrer à l'intérieur de l'organe tubulaire 12.

L'enclume et le marteau 86 sont munis de surfaces de matriçage 88,90 ayant des formes complémentaires des faces définitives du volet 14 que l'on veut obtenir.

Le volet 14 plissé est introduit dans l'organe tubulaire 12, en étant porté par l'enclume 84, de manière que ses extrémités d'accrochage 62,64 soient sensiblement alignées avec les fentes 66,68 des têtes T des tourillons, comme cela est représenté sur la figure 3.

Ensuite, on introduit le marteau 86 dans l'organe tubulaire 12 et on comprime les faces du volet 14 entre l'enclume 84 et le marteau 86 de manière à aplatir, au moins partiellement, les plis 78' à 80'. Cette compression a pour effet, d'une part, d'écarter les extrémités d'accrochage 62,64 du volet l'une de l'autre, et d'autre part, d'emboîter ces extrémités dans les fentes 66,68 correspondantes des têtes T, le centrage du volet 14 par rapport aux tourillons 16,18 et à l'axe X se faisant par coopération des encoches 70,72 et des saillies 74,76.

Après compression du volet 14 ce dernier a une forme telle que représentée sur la figure 1.

## Revendications

1. Agencement d'une vanne (10) dans un organe tubulaire (12), du type dans lequel la vanne (10) comprend un volet métallique (14) monté rotatif à l'intérieur de l'organe tubulaire (12) autour d'un axe de rotation (X) sensiblement diamétral, ce volet (14) étant porté par des premier et second tourillons (16, 18) montés rotatifs autour de l'axe de rotation (X) dans des supports (20, 22) solidaires de l'organe tubulaire (12) formant des premier et second logements (26, 28) sensiblement diamétralement opposés débouchant à l'intérieur de l'organe tubulaire (12), caractérisé en ce que le volet (14) comprend au moins un pli (78 à 82), sensiblement perpendiculaire à son axe de rotation (X), de précontrainte du volet (14) en position d'écartement des tourillons (16, 18), le volet (14) formant ainsi une entretoise d'écartement des tourillons (16, 18) entre eux vers des fonds (30, 32), sensiblement transversaux à l'axe de rotation (X), délimitant les logements (26, 28).

2. Agencement selon la revendication 1, caractérisé en ce que le premier tourillon (16) est muni d'une extrémité de manoeuvre (24) faisant saillie à l'extérieur de l'organe tubulaire (12) à travers un orifice de passage (34) ménagé dans le fond (30) du premier logement, l'extrémité de manoeuvre (24) étant reliée au reste du premier tourillon (16) par un épaulement d'appui (36) coopérant avec un bossage d'appui (38) qui est ménagé dans le fond (30) du premier logement (26), autour de l'orifice de passage (34), et qui fait saillie vers l'intérieur de l'organe tubulaire (12).

3. Agencement selon la revendication 2, caractérisé en ce que l'extrémité de manoeuvre (24) du premier tourillon (16) est reliée à une manivelle de manoeuvre (40) comprenant une extrémité de liaison munie d'un orifice (42) d'emboîtement sur l'extrémité de manoeuvre (24), cette dernière étant munie de deux méplats (44) diamétralement opposés d'immobilisation en rotation de la manivelle (40) par rapport au premier tourillon (16) coopérant avec un contour complémentaire de l'orifice d'emboîtement (42), la manivelle (40) étant immobilisée axialement sur le premier tourillon (16) par enserrement de son extrémité de liaison entre, d'une part, deux épaulements (46) de l'extrémité de manoeuvre délimitant les deux méplats (44), et d'autre part, deux saillies radiales (48) de l'extrémité de manoeuvre formées par écrasement de cette extrémité.

4. Agencement selon l'une quelconque des revendications précédentes, caractérisé en ce que le fond (32) du second logement (28) est bombé vers l'intérieur de l'organe tubulaire (12).

5. Agencement selon l'une quelconque des revendications précédentes, caractérisé en ce que, dans chaque logement (26, 28), un organe annulaire formant palier (50, 52) est interposé coaxialement au tourillon correspondant (16, 18) entre deux surfaces de portée (P, P') délimitant respectivement ce tourillon et ce logement, le palier (50, 52) étant immobilisé axialement entre le fond (30, 32) du logement et un épaulement d'appui (54, 56) délimitant une tête (T) de liaison du tourillon (16, 18) avec le volet (14).

6. Agencement selon la revendication 5, caractérisé en ce que le palier (50, 52) coopère avec un enfoncement annulaire (58, 60) d'expansion axiale du palier, ménagé dans le fond (30, 32) du logement correspondant, en retrait par rapport à la surface de ce fond en contact avec le tourillon correspondant (16, 18).

7. Agencement selon la revendication 5 ou 6, caractérisé en ce que le palier (50, 52) est fabriqué dans un matériau à base de fibres métalliques et de graphite.

8. Agencement selon l'une quelconque des revendications précédentes, caractérisé en ce que le volet (14) comprend un pli principal central (78) faisant saillie sur une face du volet (14) et deux plis secondaires (80, 82), s'étendant de part et d'autre du pli principal, faisant saillie sur l'autre face du volet, le pli principal (78) ayant une profondeur plus importante que celle des plis secondaires.

9. Agencement selon l'une quelconque des revendications précédentes, caractérisé en ce que les supports (20, 22) formant logements sont venus de matière avec l'organe tubulaire (12).

10. Agencement selon l'une quelconque des revendications précédentes, caractérisé en ce que le volet (14) est accroché dans les tourillons (16, 18) par emboîtement de la tranche d'extrémités d'accrochage (62, 64) diamétralement opposées de ce volet (14) dans des fentes (66, 68) ménagées dans les tourillons (16, 18).

11. Agencement selon la revendication 10, caractérisé en ce que chaque extrémité d'accrochage (62, 64) est munie d'une encoche (70, 72) de centrage du volet (14) par rapport aux tourillons correspondants (16, 18), ménagée dans la tranche de cette extrémité (62, 64), coopérant par effet de coin avec une saillie complémentaire (74, 76) ménagée dans la fente (66, 68) du tourillon correspondant (16, 18).

12. Agencement selon l'une quelconque des revendications précédentes, caractérisé en ce que l'organe tubulaire (12) constitue un tronçon de tubulure d'échappement de véhicule automobile.

13. Procédé de montage du volet métallique de l'agencement selon la revendication 10 ou 11, caractérisé en ce que :
- préalablement à la mise en place du volet (14) dans l'organe tubulaire (12), on plisse ce volet (14) de manière à former des plis (78' à 82') sensiblement perpendiculaires à l'axe d'alignement des extrémités d'accrochage (62, 64) du volet, afin que l'écartement entre ces extrémités (62, 64) soit inférieur à l'écartement entre les tourillons (16, 18) en place dans l'organe tubulaire (12),
- on introduit le volet (14) dans l'organe tubulaire (12) de manière que ses extrémités (62, 64) soient sensiblement alignées avec les fentes (66, 68) des tourillons (16, 18), et
- on comprime les faces du volet (14) de manière à aplatir, au moins partiellement, les plis (78' à 82') afin d'écarter les extrémités d'accrochage (62, 64) du volet l'une de l'autre et emboîter ces extrémités (62, 64) dans les fentes (66, 68) correspondantes des tourillons.
